(19) **Europäisches Patentamt / European Patent Office / Office européen des brevets**

(11) **EP 4 772 432 A1**

(12) # EUROPEAN PATENT APPLICATION

(43) Date of publication:
08.07.2026   Bulletin 2026/28

(21) Application number: 25150004.7

(22) Date of filing: 02.01.2025

(51) International Patent Classification (IPC):
**B63H 25/04** *(2006.01)*        **B63H 25/44** *(2006.01)*
**G05D 1/00** *(2024.01)*

(52) Cooperative Patent Classification (CPC):
**B63H 25/04; B63H 25/44; G05D 1/00;**
B63H 2025/045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Humphree AB**
**417 05 Göteborg (SE)**

(72) Inventor: **Lejon, Philip**
**426 58 VÄSTRA FRÖLUNDA (SE)**

(74) Representative: **Ström & Gulliksson AB**
**P.O. Box 4188**
**203 13 Malmö (SE)**

(54) **MARINE AUTOPILOT STEERING SYSTEM**

(57)    The present disclosure relates to a marine autopilot steering system for a marine vessel having a stern, comprising a positioning system arranged to provide a course over ground input, an input unit arranged for setting a course or lock an existing course, a speed sensor arranged to provide a speed input, a first deflector unit arranged at a starboard side of the stem and a second deflector unit arranged at a port side of the stern, a control unit operatively connected with the positioning system, the speed sensor, the first deflector unit and the second deflector unit, wherein the control unit is configured to steer the marine vessel by deploying one of the first deflector unit and the second deflector unit based on the course over ground input and the speed input.

FIG. 2

## Description

## TECHNICAL FIELD

The disclosure relates generally to maneuvering and steering of a marine vessel. In particular aspects, the disclosure relates to a marine autopilot steering system. The disclosure can be applied to marine vessels, such as watercrafts, motorboats, work boats, sport vessels, boats, ships, sailing boats among other vessel types. Although the disclosure may be described with respect to a particular marine vessel, the disclosure is not restricted to any particular marine vessel.

## BACKGROUND

In the maritime industry, the ability to maintain a precise course over extended periods is crucial for efficient navigation and operational safety. Marine autopilot systems have been developed to automate the steering of vessels, thereby reducing the workload on human operators and enhancing navigational accuracy. However, despite advancements, existing autopilot systems often fall short in terms of ease of installation, adaptability, and cost-effectiveness, particularly for smaller vessels or retrofit applications.

Traditionally, marine autopilot systems have relied on complex mechanical linkages and extensive integration with the vessel's steering mechanisms. These systems can be cumbersome to install, requiring significant modifications to the vessel's existing infrastructure. This complexity not only increases the initial cost but also limits the applicability of such systems to larger vessels where the investment can be justified. Smaller vessels, which form a significant portion of the maritime industry, often do not benefit from autopilot technology due to these barriers.

Moreover, existing solutions frequently lack the flexibility needed to handle varying operational conditions. Many systems are designed with a one-size-fits-all approach, which fails to consider the diverse range of vessel types and navigational environments encountered in practice. This can result in suboptimal performance, particularly in challenging conditions such as low-speed maneuvering, congested waterways, or adverse weather.

Furthermore, the integration of autopilot systems with other navigational aids, such as GPS and speed sensors, can be problematic. Compatibility issues and the need for specialized expertise to configure these systems further hinder their adoption among smaller commercial operators and recreational users.

Improvements in marine autopilot systems are needed to address these shortcomings by providing solutions that are not only simple to install but also adaptable to a wide range of vessel types and sizes. Such advancements would facilitate broader adoption of autopilot technology, enhancing safety and operational efficiency across the maritime sector. An ideal system would seamlessly integrate with existing navigational equipment, be easy to install with minimal modifications, and offer robust performance across diverse operational conditions.

## SUMMARY

According to a first aspect of the disclosure, a marine autopilot steering system for a marine vessel having a stern, comprising a positioning system arranged to provide a course over ground input, an input unit arranged for setting a course or lock an existing course, a speed sensor arranged to provide a speed input, a first deflector unit arranged at a starboard side of the stern and a second deflector unit arranged at a port side of the stern, a control unit operatively connected with the positioning system, the speed sensor, the first deflector unit and the second deflector unit, wherein the control unit is configured to steer the marine vessel by deploying one of the first deflector unit and the second deflector unit based on the course over ground input and the speed input.

The first aspect of the disclosure may seek to provide an easily installable and adaptable marine autopilot system for a variety of vessel sizes and types.

A technical benefit may include enhanced ease of installation and integration with existing vessel systems, allowing for broader adoption across the maritime industry. The system's configuration minimizes the need for extensive modifications to the vessel, making it suitable for retrofitting on smaller vessels that typically do not utilize autopilot technology. Additionally, the integration of course over ground input and speed input enables precise and efficient steering, improving navigational accuracy and operational safety.

Optionally in some examples, including in at least one preferred example, wherein the control unit is configured to deploy the first deflector unit for steering the marine vessel towards starboard by providing a drag force at the starboard side of the stern. A technical benefit may include enhanced maneuverability and precise control of the vessel's direction when navigating in tight or congested waterways.

Optionally in some examples, including in at least one preferred example, wherein the control unit is configured to deploy the second deflector unit for steering the marine vessel towards port by providing a drag force at the port side of the stern. A technical benefit may include improved handling and ease of making port-side course adjustments, contributing to safer and more efficient navigation.

Optionally in some examples, including in at least one preferred example, wherein the control unit is configured to withdraw the deployed deflector unit after the course has been corrected. A technical benefit may include the reduction of hydrodynamic drag and increased fuel efficiency by minimizing unnecessary deployment of deflector units.

Optionally in some examples, including in at least one preferred example, wherein the speed input is at speeds with low hydrodynamic flow of the marine vessel, whereby the marine vessel is below a threshold for effectively altering the transversal or longitudinal angle of the specific marine vessel by use of its deflector units for the specific marine vessel. A technical benefit may include improved maneuverability at low speeds, such as during docking or navigating shallow waters.

Optionally in some examples, including in at least one preferred example, wherein a low hydrodynamic flow of the marine vessel is determined by a Froude number (Fr) as defined as

$$Fr = V/\sqrt{(gL)}$$

where (V) is the flow velocity (in m/s), (g) is the acceleration due to gravity (in $m/s^2$) and (L) is the marine vessel's water length (in m). A technical benefit may include the ability to quantitatively assess and adapt to different hydrodynamic conditions, optimizing the steering response accordingly.

Optionally in some examples, including in at least one preferred example, wherein speeds with low hydrodynamic flow of the marine vessel and/or threshold are at a Froude number below 0.4. A technical benefit may include the capability to operate efficiently in low-speed conditions, ensuring precise control and stability of the vessel.

Optionally in some examples, including in at least one preferred example, wherein the control unit is configured to automatically activate and deactivate the autopilot steering system at predetermined speed input. A technical benefit may include seamless transition between manual and autopilot modes, enhancing operational efficiency and reducing pilot workload.

Optionally in some examples, including in at least one preferred example, wherein the predetermined speed input is configurable by the operator of the marine vessel or is set by the threshold corresponding to the marine vessel's Froude number below 0.4. A technical benefit may include customized control settings that cater to specific vessel characteristics and operational preferences, increasing flexibility and accuracy.

Optionally in some examples, including in at least one preferred example, wherein the control unit is configured to automatically regulate a course over ground by deploying one of the first deflector unit and the second deflector unit to maintain the desired course over ground input, and subsequently withdraw the deflector unit after correction of the course. A technical benefit may include enhanced navigational precision, maintaining a steady course with minimal input from the operator.

Optionally in some examples, including in at least one preferred example, wherein the control unit is configured to continuously monitor the vessel's heading and make micro-adjustments to the deflector units to maintain a stable course. A technical benefit may include improved stability and reduced deviation from the desired course, enhancing navigational reliability.

Optionally in some examples, including in at least one preferred example, wherein the micro-adjustments are deployments and withdrawals of the deflector units. A technical benefit may include precise control over steering dynamics, leading to smoother and more efficient navigation.

Optionally in some examples, including in at least one preferred example, wherein the control unit is capable of storing multiple predetermined speed inputs for different operational modes of the marine vessel. A technical benefit may include versatility in operations, allowing the vessel to adapt its steering characteristics to various sailing conditions.

Optionally in some examples, including in at least one preferred example, wherein the control unit is configured to obtain direction inputs. A technical benefit may include enhanced navigational awareness and the ability to adjust course based on directional data, improving overall control.

Optionally in some examples, including in at least one preferred example, wherein the control unit is configured to adjust the deployment of the first and second deflector units based on the direction inputs. A technical benefit may include improved course correction and steering efficiency, as the system actively responds to directional changes.

Optionally in some examples, including in at least one preferred example, wherein the input unit comprises a user interface with a display screen. A technical benefit may include user-friendly interaction and real-time data visualization, enhancing operational convenience and decision-making.

Optionally in some examples, including in at least one preferred example, wherein the control unit is configured to operate in a manual override mode allowing direct user control of the first and second deflector units. A technical benefit may include increased safety and user empowerment, enabling manual intervention when necessary.

Optionally in some examples, including in at least one preferred example, wherein the control unit is further configured to store navigation routes and replay them for automated steering. A technical benefit may include automation of repetitive routes, increasing efficiency and reducing operator workload.

According to a second aspect of the disclosure, a marine vessel comprising the marine autopilot steering system as disclosed above. The second aspect of the disclosure may seek to provide an easily installable and adaptable marine autopilot system for a variety of vessel sizes and types. A technical benefit may include enhanced ease of installation and integration with existing vessel systems, allowing for broader adoption across the maritime industry.

Optionally in some examples, including in at least one preferred example, further comprising a hull or a plurality of hulls, having a bow and a stern, and a centerline, the first deflector unit arranged at a starboard side of the stern and the second deflector unit arranged at a port side of the stern on opposite side of the centerline. A technical benefit may include balanced and effective steering control, optimizing directional adjustments based on hull configuration.

According to a third aspect of the disclosure, a method for steering a marine vessel having a stern using a marine autopilot steering system as disclosed above, comprising:

> providing a course over ground input using a positioning system;
> setting a desired course or locking an existing course using an input unit;
> providing a speed input using a speed sensor or log;
> steering the marine vessel by deploying one of the first deflector unit and the second deflector unit based on the course over ground input and the speed input via a control unit operatively connected with the positioning system, the speed sensor, the first deflector unit, and the second deflector unit. The third aspect of the disclosure may seek to provide an easily installable and adaptable marine autopilot system for a variety of vessel sizes and types. A technical benefit may include enhanced ease of installation and integration with existing vessel systems, allowing for broader adoption across the maritime industry.

Optionally in some examples, including in at least one preferred example, further comprising operating the marine vessel at a speed below a predetermined threshold where hydrodynamic flow is insufficient for effectively altering the vessel's transversal or longitudinal angle using its deflector units. A technical benefit may include stable and controlled maneuvering in low-speed environments, enhancing safety and precision.

Optionally in some examples, including in at least one preferred example, whereby a low hydrodynamic flow of the marine vessel is determined by a Froude number (Fr) as defined as

$$Fr = V/\sqrt{(gL)}$$

where (V) is the flow velocity (in m/s), (g) is the acceleration due to gravity (in m/s$^2$) and (L) is the marine vessel's water length (in m). A technical benefit may include precise identification of low-flow conditions, informing optimal steering strategies.

Optionally in some examples, including in at least one preferred example, whereby speeds with low hydrodynamic flow of the marine vessel and/or threshold are a Froude number below 0.4. A technical benefit may include efficient handling and course stability, even in low-speed scenarios.

Optionally in some examples, including in at least one preferred example, further comprising receiving a speed input indicative of the vessel's current speed, determining whether the vessel's speed is below the threshold for effective deflector unit deployment, adjusting the deployment of the deflector units to maintain course alignment, continuously monitoring the speed input and hydrodynamic conditions to make real-time adjustments to the deflector units as necessary to ensure effective steering and course maintenance. A technical benefit may include comprehensive speed management and steering optimization, ensuring consistent performance across varying conditions.

According to a fourth aspect of the disclosure, use of a first deflector unit arranged at a starboard side of the stern of a marine vessel and a second deflector unit arranged at a port side of the stern for steering the marine vessel. The fourth aspect of the disclosure may seek to provide an easily installable and adaptable marine autopilot system for a variety of vessel sizes and types. A technical benefit may include enhanced ease of installation and integration with existing vessel systems, allowing for broader adoption across the maritime industry.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

**BRIEF DESCRIPTION OF THE DRAWINGS**

Examples are described in more detail below with reference to the appended drawings.

> **FIG. 1** is an exemplary marine vessel comprising a marine autopilot steering system according to an example.
> **FIG. 2** is an exemplary marine autopilot steering system according to an example.
> **FIGS. 3-4** are examples deflector units.
> **FIG. 5** is another exemplary marine autopilot steering system according to an example.
> **FIG. 6** is an exemplary marine autopilot steering system of **FIG. 2**.

**DETAILED DESCRIPTION**

The detailed description set forth below provides information and examples of the disclosed technology with sufficient detail to enable those skilled in the art to practice the disclosure.

The disclosure addresses the critical need for an efficient, adaptable, and user-friendly marine autopilot steering system, particularly focusing on enhancing navigational precision and vessel control in various maritime conditions. Traditional autopilot systems often encounter limitations such as complex installation processes, lack of flexibility across different vessel types, and inefficiency in low-speed scenarios. These challenges necessitate a novel approach that simplifies integration, optimizes performance, and provides robust adaptability to diverse operational environments.

Marine vessels at low speeds, e.g. below planing threshold, are difficult to keep in a straight course. The operator needs to be very active with a rudder which is tiring for the operator. Deflector units have no or little effect when it comes to levelling the trim or pitch angle at this speed, and are typically deactivated below 8 knots.

The disclosure achieves these objectives by incorporating a comprehensive system that comprises a positioning system to deliver accurate course over ground input, an input unit for setting or locking courses, and a speed sensor to provide real-time speed data. The system strategically utilizes first and second deflector units positioned at the stem's starboard and port sides, respectively. These deflector units are controlled by a control unit that processes navigational and environmental inputs to steer the vessel effectively by deploying the appropriate deflector unit at low speeds.

The system comprises an ability to operate efficiently at low speeds, where traditional systems struggle due to inadequate hydrodynamic flow for effective steering. By employing deflector units that can be dynamically adjusted based on real-time speed and environmental conditions like wind and current, the system ensures precise control and stability even when the vessel operates below the usual hydrodynamic threshold. This capability is quantitatively assessed using the Froude number, allowing for scientifically informed adjustments to steering strategies.

The advantages of this system are manifold. It offers enhanced maneuverability and course correction precision, reducing the need for extensive manual intervention and allowing for seamless transitions between manual and automatic steering. The integration of learning algorithms further refines the system's efficiency by optimizing activation and deactivation speeds based on historical data and vessel performance. Additionally, the inclusion of a manual override ensures safety and control, empowering operators to intervene when necessary.

Compared to prior solutions, this disclosure stands out due to its simplicity in installation and adaptability across a wide range of vessel types and sizes. The ability to automatically adjust to changing environmental conditions and maintain optimal performance without extensive modification to the vessel's existing infrastructure is a significant advancement. By providing a user-friendly interface and integrating with other navigational systems, the invention enhances situational awareness and decision-making capabilities, making it a superior solution in the world of marine autopilot systems.

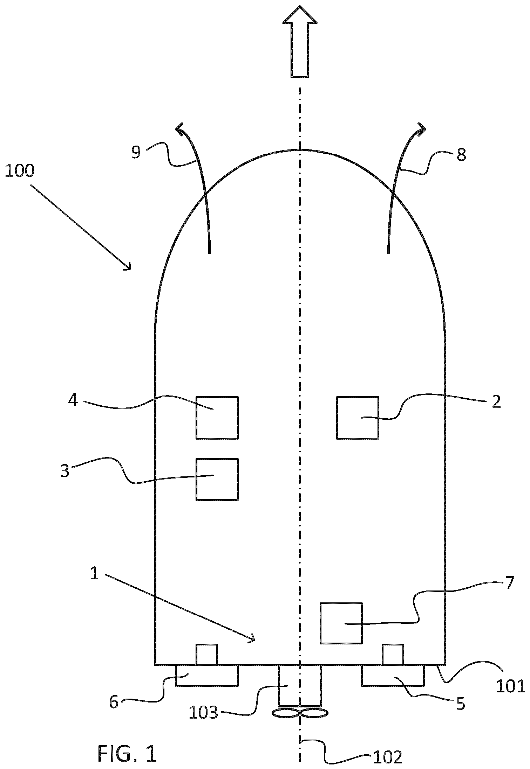

FIG. 1 is an exemplary marine vessel 100 comprising a marine autopilot steering system 1 according to an example. The marine vessel 100 comprises a stern 101 and a center line 102. In the example of FIG. 1, the marine vessel 100 comprises a propulsion unit 103 arranged at the stern 101. In other examples, the marine vessel may comprise two or more propulsion units.

The marine autopilot steering system 1 comprises a positioning system 2 arranged to provide a course over ground input, and an input unit 3 arranged for setting a course or lock an existing course. In a maritime setting, setting a course over ground involves determining and establishing a specific navigational path that a vessel should follow over the Earth's surface. This process typically utilizes the positioning system, such as GPS, to provide precise data on the marine vessel's current position and desired trajectory. However, maintaining this course over ground can be challenging due to various environmental influences that affect the marine vessel's movement. Factors such as wind, currents, tides, and waves constantly exert forces on the vessel, potentially causing deviations from the intended path. These dynamic environmental conditions require continuous adjustments to the marine vessel's steering to ensure that the set course is accurately followed.

Setting a course or locking an existing course involves configuring the marine vessel's navigational system to adhere to the predetermined path. This can be accomplished through an input unit, where the operator enters the desired course parameters, including heading and speed. Locking an existing course allows the marine vessel to continue on its current trajectory, making minor adjustments as needed to account for any deviations caused by environmental conditions. This process ensures that the marine vessel remains on track, optimizing navigational efficiency and safety. By integrating these functionalities, the marine autopilot steering system provides a robust solution for maintaining accurate course alignment in a challenging maritime environment.

The marine autopilot steering system 1 also comprises a speed sensor 4 or log arranged to provide a speed input. Furthermore, a first deflector unit 5 is arranged at a starboard side of the stern 101 and a second deflector unit 6 is arranged at a port side of the stern 101. A control unit 7 is operatively connected with positioning system 2, the speed sensor 4, the first deflector unit 5 and the second deflector unit 6, the control unit 7 is configured to steer the marine vessel 100 by deploying one of the first deflector unit 5 and the second deflector unit 6 based on the course over ground input and the speed input. The control unit 7 may also operatively connected with the input unit 3. The marine autopilot steering system 1 can then automatically adjust the marine vessel's 100 steering mechanisms, such as deflector units 5, 6 to maintain the course despite external influences.

The control unit **7** may include a microprocessor, microcontroller, programmable digital signal processor or another programmable device. The control unit **7** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In addition, the control unit **7** is configured to deploy the first deflector unit **5** for steering the marine vessel **100** towards starboard by providing a drag force at the starboard side of the stern **101** as indicated by arrow **8**. Also, the control unit **7** is configured to deploy the second deflector unit **6** for steering the marine vessel **100** towards port by providing a drag force at the port side of the stern **101** as indicated by arrow **9**.

The control unit **7** is also configured to withdraw the deployed deflector unit **5, 6** after the course has been corrected so that change of course is stopped.

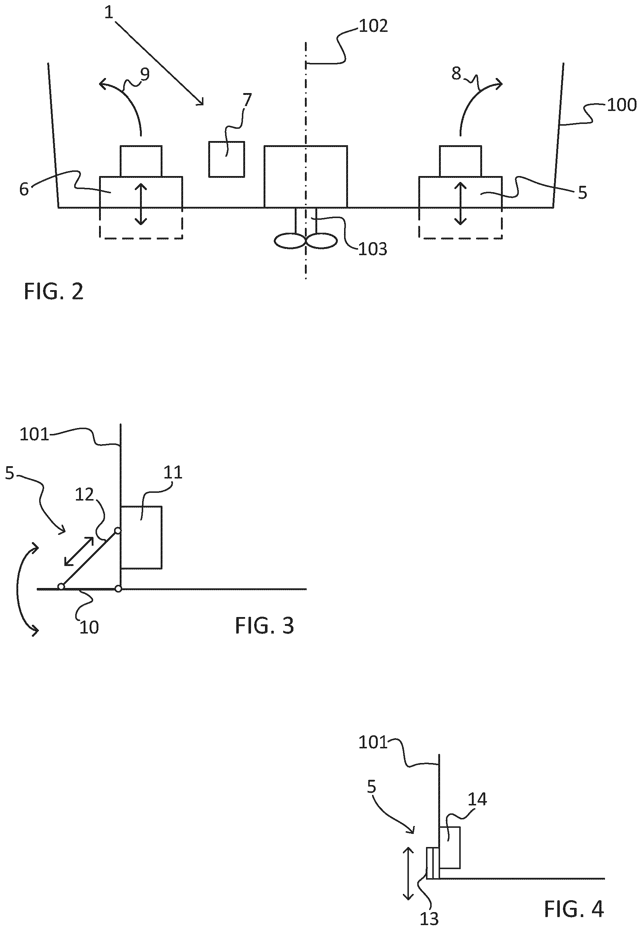

In **FIG. 2,** an exemplary marine autopilot steering system **1** according to an example is shown. The marine autopilot steering system **1** is seen from the stern end of the marine vessel **1**. The deflector units **5, 6** are movable between a drag creating position and a drag neutral position as seen in **FIG. 2**. According to the disclosure the deflector units **5, 6** are applied to steer the vessel during predetermined conditions and function as steering means.

At speeds with high enough hydrodynamic flow, i.e. close to planing threshold, deflector units **5, 6** create lift and alters the angles of the marine vessel in longitudinal or transversal direction. At slower speeds, little or no lifting force is achieved, however the increased appendage drag will start rotating the marine vessel, changing the course.

Hence, the speed input may be at speeds with low hydrodynamic flow of the marine vessel **100,** whereby the marine vessel **100** is below a threshold for effectively altering the transversal or longitudinal angle of the specific marine vessel **100** by use of its deflector units **5, 6** for the specific marine vessel **100.**

Moreover, the low hydrodynamic flow of the marine vessel is determined by a Froude number (Fr) as defined as

$$\mathrm{Fr} = \mathrm{V}/\sqrt{(\mathrm{gL})}$$

where (V) is the flow velocity (in m/s), (g) is the acceleration due to gravity (in m/s$^2$) and (L) is the marine vessel's water length (in m).

Hydrodynamic flow refers to the way water moves around the hull of a marine vessel as it travels through the water. This flow is critical in determining the marine vessel's resistance, stability, and overall maneuverability. The behavior of hydrodynamic flow is influenced by various factors, including the marine vessel's speed, hull shape, and water properties. Understanding and optimizing hydrodynamic flow is essential for improving the efficiency and performance of marine vessels.

In the context of marine navigation and marine vessel design, the Froude number (Fr) is a crucial dimensionless parameter that helps in analyzing the hydrodynamic characteristics of a marine vessel. The Froude number essentially represents the ratio of the marine vessel's inertial forces to gravitational forces and is instrumental in predicting the wave-making resistance of the marine vessel.

In the context of the present disclosure, utilizing the Froude number provides a scientific basis for assessing and optimizing the vessel's steering performance, particularly at low speeds where traditional hydrodynamic forces are insufficient for effective maneuvering. By calculating the Froude number, the system can determine whether the marine vessel is operating within a regime where hydrodynamic flow is too low to allow for conventional steering methods. This insight enables the autopilot system **1** to dynamically adjust the deployment of deflector units **5, 6,** ensuring that the marine vessel maintains stability and precise course alignment even in challenging conditions.

The use of the Froude number allows the system to quantitatively assess low-speed scenarios, helping to set thresholds for effective steering adjustments. For example, when the Froude number falls below a certain value, indicating low hydrodynamic flow, the system can modify its steering strategies to compensate for the reduced natural resistance and control.

By integrating the Froude number into its operational algorithms, the present disclosure offers a sophisticated approach to understanding and leveraging hydrodynamic flow, thereby enhancing the overall efficiency and effectiveness of the marine autopilot steering system **1**.

Furthermore, speeds with low hydrodynamic flow of the marine vessel 100 and/or threshold are at a Froude number below 0.4.

As mentioned above, the Froude number (Fr) is a dimensionless parameter that provides insight into the hydrodynamic characteristics of the marine vessel as it moves through water. Specifically, it helps to assess the relationship between the inertial forces and gravitational forces acting on the marine vessel. A Froude number below 0.4 typically indicates a regime where the marine vessel is operating at low speeds relative to its waterline length, and the hydrodynamic flow is characterized by low wave-making resistance.

When the Froude number is below 0.4, the marine vessel is generally said to be in a "displacement mode" of operation, where it moves through the water without generating significant waves. In this range, the marine vessel's speed is not sufficient to create substantial dynamic lift or planing forces, meaning that most of the marine vessel's buoyancy is provided by displacement of water rather than by hydrodynamic lift. This condition is often encountered during slow-speed maneuvers such as docking, navigating in tight or shallow areas, or when operating in congested waterways.

Operating in this low Froude number regime presents specific challenges for steering and control because the natural hydrodynamic forces that aid in maneuverability are minimal. Consequently, conventional steering mechanisms that rely on these forces may be less effective, necessitating alternative approaches to maintain course and stability. For instance, the vessel's ability to pivot or change direction using rudder inputs alone might be limited due to insufficient water flow over the control surfaces.

In the context of the present invention, recognizing when the Froude number falls below 0.4 is crucial for optimizing the deployment of deflector units to enhance steering performance. By adjusting the control strategies based on this threshold, the autopilot system can ensure effective maneuverability and stability, even when operating under conditions where traditional hydrodynamic forces are inadequate. This capability allows the marine vessel to maintain precise control and navigate safely, addressing a key limitation found in prior art systems.

Moreover, the threshold for effectively altering the marine vessel's angle is dynamically adjustable based on environmental conditions such as wind or current. A technical benefit may include adaptive control that responds to changing environmental factors, maintaining optimal performance and safety.

The control unit 7 may also be configured to automatically activate and deactivate the autopilot steering system 1 at predetermined speed input. A technical benefit may include seamless transition between manual and autopilot modes, enhancing operational efficiency and reducing operator workload. The predetermined speed input may be configurable by the operator of the marine vessel or is set by the threshold corresponding to the marine vessel's Froude number below 0.4. A technical benefit may include customized control settings that cater to specific marine vessel characteristics and operational preferences, increasing flexibility and accuracy.

Furthermore, the control unit 7 is configured to automatically regulate a course over ground by deploying one of the first deflector unit 5 and the second deflector unit 6 to maintain the desired course over ground input, and subsequently withdraw the deflector unit after correction of the course. The control unit 7 may also be configured to adjust the sensitivity of the deflector units' deployment based on the hydrodynamic flow conditions of the marine vessel 100. A technical benefit may include increased responsiveness to varying water conditions, ensuring consistent steering performance.

Additionally, the control unit may comprise a learning algorithm to optimize the activation and deactivation speeds based on previous voyages and marine vessel performance data. A technical benefit may include continuous improvement of the system's performance, adapting to historical data for better future operations.

The autopilot steering system 1 may comprise a manual override feature that allows the operator to adjust a threshold speed for activation and deactivation. A technical benefit may include enhanced safety and control, providing the operator with the ability to intervene as necessary. The control unit 7 may be configured to continuously monitor the marine vessel's heading and make micro-adjustments to the deflector units 5, 6 to maintain a stable course. A technical benefit may include improved stability and reduced deviation from the desired course, enhancing navigational reliability. The micro-adjustments are deployments and withdrawals of the deflector units 5, 6. A technical benefit may include precise control over steering dynamics, leading to smoother and more efficient navigation, as well as less energy consumption.

Also, the control unit 7 may be capable of storing multiple predetermined speed inputs for different operational modes of the marine vessel 100. A technical benefit may include versatility in operations, allowing the marine vessel to adapt its steering characteristics to various sailing conditions.

As seen in FIG. 3, the first and second deflector units may each comprise a trimtab 10 and a trim actuator 11. Trim tabs are adjustable control surfaces attached to the trailing edge of a marine vessel's hull, typically at the stern 101. These devices play a crucial role in enhancing the performance and stability of marine vessels by allowing for dynamic adjustments to the vessel's trim and balance during operation. The primary function of trimtabs is to control the longitudinal and lateral balance of the marine vessel, optimizing its hydrodynamic efficiency and improving overall handling characteristics.

When a marine vessel is underway, variations in speed, load distribution, and sea conditions can cause undesirable changes in the vessel's pitch and roll. Trimtabs address these issues by providing the operator with the ability to adjust the angle of the marine vessel relative to the water surface. By altering the position of the trimtabs, the operator can influence the lift and drag forces acting on the hull, thereby correcting imbalances and achieving a more level and efficient ride.

The operation of trimtabs involves hydraulic or electric actuators that extend or retract the trimtabs, changing their angle relative to the hull. This adjustment affects the hydrodynamic forces at play, allowing for fine-tuning of the vessel's attitude. For example, deploying the trimtabs downward increases lift at the stern, reducing the bow's angle and promoting a smoother ride. Conversely, retracting the tabs can decrease lift, allowing the bow to rise, which may be beneficial in certain operating conditions.

In addition to improving comfort and handling, the use of trimtabs can enhance fuel efficiency by optimizing the hull's interaction with the water, minimizing resistance and allowing the marine vessel to achieve higher speeds with less power. Furthermore, trimtabs can aid in maintaining a clear line of sight for the operator by correcting excessive bow rise, contributing to safer navigation.

Overall, trimtabs are an integral component in modern marine vessels, providing operators with precise control over trim and balance, enhancing performance, and ensuring a smoother, more efficient voyage.

In the present disclosure, the trimtabs are applied as parts of the autopilot steering system **1,** especially in low speeds of the marine vessel **100.**

The trimtab **10** is hingedly attached to the stern **101** and in the present example, a hydraulic cylinder **12** is connected with the trimtab at one end and at the opposite end the hydraulic cylinder **12** is connected with stern **101** whereby the angle of the trimtab **10** may be changed in relation to the hull of the marine vessel.

As seen in **FIG. 4,** the first and second deflector units **5, 6** may each comprise an interceptor **13** and an interceptor actuator **14.** A technical benefit may include rapid and responsive steering adjustments, enhancing the vessel's agility and control in various sea conditions.

Interceptors are advanced hydrodynamic control devices installed on the hull of a marine vessel, typically at the stern, designed to enhance the marine vessel's performance and stability by adjusting the trim and reducing drag. Unlike traditional trimtabs, interceptors are characterized by their vertical blades or plates, which extend perpendicularly into the water flow beneath the marine vessel's hull. This unique design allows interceptors to provide rapid and precise adjustments to the marine vessel's hydrodynamic characteristics.

The primary function of interceptors is to control the longitudinal and lateral trim of the marine vessel, optimizing hydrodynamic efficiency and improving handling. By varying the depth of the interceptor blade's extension into the water, the system can influence the lift and drag forces acting on the marine vessel. This capability allows for real-time adjustments to the marine vessel's attitude, enhancing stability and performance across a range of operating conditions.

Interceptors operate using hydraulic or electric actuators that extend or retract the blade vertically. When deployed, the interceptor blade creates a high-pressure zone in front of the blade and a low-pressure zone behind it, generating lift at the stem. This lift can be used to adjust the marine vessel's pitch, reducing bow rise and improving visibility and comfort for the operator. The rapid response of interceptors allows for quick corrections, making them particularly effective in dynamic sea conditions.

The design of interceptors enables them to be more compact and less obtrusive than traditional trimtabs, reducing the risk of damage and drag when not in use. This minimalist design also allows for easier integration into various hull configurations without significantly altering the marine vessel's hydrodynamic profile.

In addition to enhancing ride comfort and handling, interceptors can significantly improve fuel efficiency by optimizing the marine vessel's interaction with the water, reducing resistance, and enabling higher speeds with less power. Their precise control over trim adjustments can also contribute to safer navigation by maintaining a level ride and clear sightlines for the operator.

Overall, interceptors represent a sophisticated solution for modern marine vessels, offering superior control over trim and balance, enhancing performance, and ensuring a more efficient and comfortable voyage.

In the present disclosure, the interceptors are applied as parts of the autopilot steering system **1,** especially in low speeds of the marine vessel **100.**

In another example, a combination of trimtabs and interceptors may be arranged on the marine vessel.

Furthermore, the deflector units **5, 6** may be equipped with sensors to provide real-time feedback to the control unit **7** for fine-tuning their deployment and/or withdrawal. A technical benefit may include enhanced accuracy and responsiveness of the deflector units, optimizing steering efficiency.

Also, the control unit **7** may be configured to switch between manual and automatic modes based on user input or environmental conditions, providing flexibility in operation. A technical benefit may include increased adaptability to changing situations, offering the best mode of operation for each scenario.

The control unit **7** may be configured to obtain direction inputs. A technical benefit may include enhanced navigational awareness and the ability to adjust course based on directional data, improving overall control. Also, the control unit **7** may be configured to adjust the deployment of the first and second deflector units **5, 6** based on the direction inputs. A technical benefit may include improved course correction and steering efficiency, as the system actively responds to directional changes.

In addition, the control unit **7** may be configured to operate in a manual override mode allowing direct user control of the first and second deflector units **5, 6.** A technical benefit may include increased safety and user empowerment, enabling manual intervention when necessary.

The control unit **7** may further configured to store navigation routes and replay them for automated steering. A technical benefit may include automation of repetitive routes, increasing efficiency and reducing operator workload.

Furthermore, the control unit **7** may be configured to integrate with other onboard systems such as radar, sonar, sensors, logs and/or nautical charts for enhanced navigational accuracy. A technical benefit may include comprehensive situational awareness and improved decision-making capabilities, leveraging integrated data for optimal navigation.

The positioning system **2** may comprise a GPS receiver, or similar marine positioning systems. A technical benefit may include accurate and reliable positioning data, essential for precise navigation and course setting.

Also, the input unit **3** may comprise a user interface with a display screen. A technical benefit may include user-friendly interaction and real-time data visualization, enhancing operational convenience and decision-making.

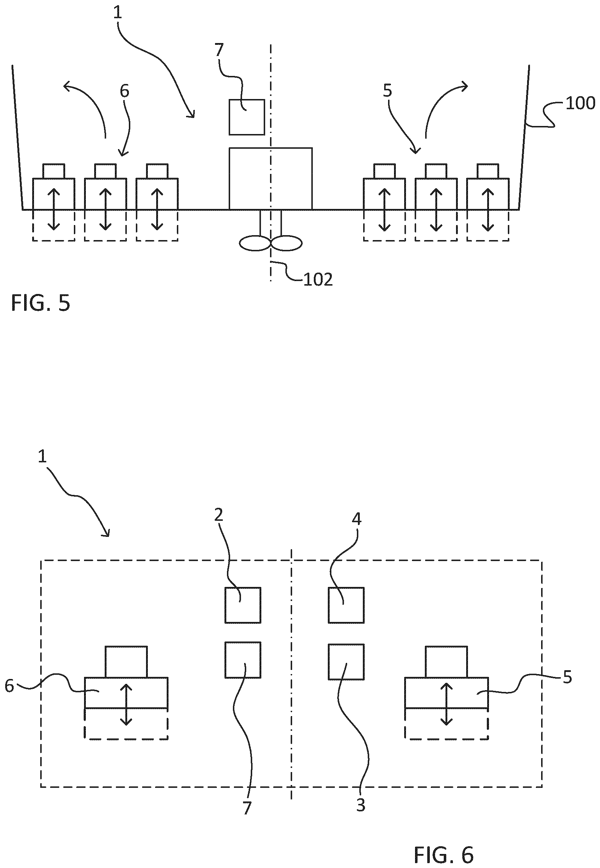

**FIG. 5** is another exemplary marine autopilot steering system **1** according to an example. In the example the first deflector unit **5** comprises a plurality of first deflectors, here three deflectors. The second deflector unit **6** also comprises a plurality of second deflectors. A technical benefit may include enhanced control and maneuverability by distributing steering forces across multiple deflectors.

In the present example, the autopilot steering system **1** may provide micro-adjustment of the course by deploying one or more of the deflectors. For instance, if a little correction of the course is necessary the deflector closest to the centerline may be deployed so that the course will change. If a larger correction of the course is necessary, the deflector farthest away from the centerline **102** may be deployed. Hereby, the steering of the marine vessel may be controlled.

The present disclosure also concerns a marine vessel **100** comprising the marine autopilot steering system **1**. The marine vessel **100** may comprise a hull or a plurality of hulls, having a bow and a stern **101,** and a centerline **102,** the first deflector unit **5** is arranged at a starboard side of the stern and the second deflector unit **6** is arranged at a port side of the stern on opposite side of the centerline **102**. A technical benefit may include balanced and effective steering control, optimizing directional adjustments based on hull configuration.

The marine vessel **100** may also comprise a propulsion unit **103** with a motor or a plurality of propulsion units. A technical benefit may include integrated power and propulsion management, enhancing overall vessel performance and efficiency. The marine vessel may also comprise one or more rudders.

The present disclosure also concerns a method for steering a marine vessel **100** having a stern **101** using a marine autopilot steering system **1** as disclosed herein. The method comprising:

- providing a course over ground input using a positioning system **2;**
- setting a desired course or locking an existing course using an input unit **3;**
- providing a speed input using a speed sensor **4** or log;
- steering the marine vessel **100** by deploying one of the first deflector unit **5** and the second deflector unit **6** based on the course over ground input and the speed input via a control unit **7** operatively connected with the positioning system **2,** the speed sensor **4,** the first deflector unit **5,** and the second deflector unit **6.**

In addition, the method may also receive direction inputs and adjusting the deployment of the first and second deflector units **5, 6** based on these inputs. A technical benefit may include responsive and adaptive steering, aligning the marine vessel's movement with navigational directives.

Additionally, the first deflector unit **5** and/or the second deflector unit **6** is/are withdrawn after correction of the course.

Furthermore, the method comprising operating the marine vessel **100** at a speed below a predetermined threshold where hydrodynamic flow is insufficient for effectively altering the marine vessel's transversal or longitudinal angle using its deflector units.

A low hydrodynamic flow of the marine vessel **100** may be determined by a Froude number (Fr) as defined as

$$\text{Fr} = \text{V}/\sqrt{(\text{gL})}$$

where (V) is the flow velocity (in m/s), (g) is the acceleration due to gravity (in m/s$^2$) and (L) is the marine vessel's water length (in m). A technical benefit may include precise identification of low-flow conditions, informing optimal steering strategies.

Speeds with low hydrodynamic flow of the marine vessel **100** and/or threshold are at a Froude number below 0.4. A technical benefit may include efficient handling and course stability, even in low-speed scenarios.

The method may also comprise receiving a speed input indicative of the marine vessel's current speed, determining whether the marine vessel's speed is below the threshold for effective deflector unit deployment, adjusting the deployment of the deflector units to maintain course alignment, continuously monitoring the speed input and hydrodynamic conditions to make real-time adjustments to the deflector units as necessary to ensure effective steering and course maintenance. A technical benefit may include comprehensive speed management and steering optimization, ensuring consistent performance across varying conditions.

The method may also receiving environmental condition inputs, including wind speed, wind direction, and current flow, determining the threshold for effectively altering the vessel's angle based on the received environmental conditions, dynamically adjusting the threshold in response to changes in environmental conditions to optimize the deployment of the deflector units, deploying the deflector units based on the dynamically adjusted threshold to maintain the vessel's desired course and stability. A technical benefit may include adaptive steering that accounts for environmental changes, maintaining optimal navigational control.

**FIG. 6** is another view of **FIG. 2,** according to an example. **FIG. 6** shows a marine autopilot steering system **1** for a marine vessel having a stern, comprising a positioning system **2** arranged to provide a course over ground input, an input unit **3** arranged for setting a course or lock an existing course, a speed sensor **4** arranged to provide a speed input, a first deflector unit **5** arranged at a starboard side of the stern and a second deflector unit **6** arranged at a port side of the stern, a control unit **7** operatively connected with positioning system **2,** the speed sensor **4,** the first deflector unit **5** and the second deflector unit **6,** the control unit **7** is configured to steer the marine vessel by deploying one of the first deflector unit **5** and the second deflector unit **6** based on the course over ground input and the speed input.

Certain aspects and variants of the disclosure are set forth in the following examples numbered consecutive below.

Example 1: A marine autopilot steering system (1) for a marine vessel (100) having a stern (101), comprising a positioning system (2) arranged to provide a course over ground input, an input unit (3) arranged for setting a course or lock an existing course, a speed sensor (4) arranged to provide a speed input, a first deflector unit (5) arranged at a starboard side of the stern (101) and a second deflector unit (6) arranged at a port side of the stern (101), a control unit (7) operatively connected with the positioning system (2), the speed sensor (4), the first deflector unit (5) and the second deflector unit (6), wherein the control unit (7) is configured to steer the marine vessel (100) by deploying one of the first deflector unit (5) and the second deflector unit (6) based on the course over ground input and the speed input.

Example 2: The marine autopilot steering system (1) of Example 1, wherein the control unit (7) is configured to deploy the first deflector unit (5) for steering the marine vessel (100) towards starboard by providing a drag force at the starboard side of the stern (101).

Example 3: The marine autopilot steering system (1) of Example 1, wherein the control unit (7) is configured to deploy the second deflector unit (6) for steering the marine vessel (100) towards port by providing a drag force at the port side of the stern (101).

Example 4: The marine autopilot steering system (1) of any of the Examples 1-3, wherein the control unit (7) is configured to withdraw the deployed deflector unit (5, 6) after the course has been corrected.

Example 5: The marine autopilot steering system (1) of any of the Examples 1-4, wherein the first and second deflector units (5, 6) each comprise a trimtab (10) and a trim actuator (11).

Example 6: The marine autopilot steering system (1) of any of the Examples 1-5, wherein the first and second deflector units (5, 6) each comprise an interceptor (13) and an interceptor actuator (14).

Example 7: The marine autopilot steering system (1) of any of the Examples 1-6, wherein the speed input is at speeds with low hydrodynamic flow of the marine vessel (100), whereby the marine vessel (100)

is below a threshold for effectively altering the transversal or longitudinal angle of the specific marine vessel by use of its deflector units for the specific marine vessel.

Example 8: The marine autopilot steering system (1) of any of the Examples 1-7, wherein a low hydrodynamic flow of the marine vessel (100) is determined by a Froude number (Fr) as defined as Fr = $V/\sqrt{(gL)}$, where (V) is the flow velocity (in m/s), (g) is the acceleration due to gravity (in $m/s^2$) and (L) is the marine vessel's water length (in m).

Example 9: The marine autopilot steering system (1) of Example 8, wherein speeds with low hydrodynamic flow of the marine vessel (100) and/or threshold are a Froude number below 0.4.

Example 10: The marine autopilot steering system (1) of any of Examples 7-8, wherein the threshold for effectively altering the marine vessel's angle is dynamically adjustable based on environmental conditions such as wind or current.

Example 11: The marine autopilot steering system (1) of any of the Examples 1-10, wherein the control unit (7) is configured to automatically activate and deactivate the autopilot steering system at predetermined speed input.

Example 12: The marine autopilot steering system (1) of Example 11, wherein the predetermined speed input is configurable by the operator of the marine vessel (100) or is set by the threshold corresponding to the marine vessel's Froude number below 0.4.

Example 13: The marine autopilot steering system (1) of any of the Examples 1-12, wherein the control unit (7) is configured to automatically regulate a course over ground by deploying one of the first deflector unit (5) and the second deflector unit (6) to maintain the desired course over ground input, and subsequently withdraw the deflector unit (5, 6) after correction of the course.

Example 14: The marine autopilot steering system (1) of any of Examples 1-13, wherein the control unit (7) is configured to adjust the sensitivity of the deflector units' deployment based on the hydrodynamic flow conditions of the marine vessel (100).

Example 15: The marine autopilot steering system (1) of any of the Examples 1-14, wherein the control unit (7) comprises a learning algorithm to optimize the activation and deactivation speeds based on previous voyages and marine vessel performance data.

Example 16: The marine autopilot steering system (1) of any of the Examples 1-15, further comprising a manual override feature that allows the operator to adjust a threshold speed for activation and deactivation.

Example 17: The marine autopilot steering system (1) of any of the Examples 1-16, wherein the control unit (7) is configured to continuously monitor the marine vessel's heading and make micro-adjustments to the deflector units (5, 6) to maintain a stable course.

Example 18: The marine autopilot steering system (1) of Example 17, wherein the micro-adjustments are deployments and withdrawals of the deflector units (5, 6).

Example 19: The marine autopilot steering system (1) of any of Examples 11-18, wherein the control unit (7) is capable of storing multiple predetermined speed inputs for different operational modes of the marine vessel (100).

Example 20: The marine autopilot steering system (1) of any of Examples 1-19, wherein the deflector units (5, 6) are equipped with sensors to provide real-time feedback to the control unit (7) for fine-tuning their deployment and/or withdrawal.

Example 21: The marine autopilot steering system (1) of any of Example 1-20, wherein the control unit (7) is configured to switch between manual and automatic modes based on user input or environmental conditions, providing flexibility in operation.

Example 22: The marine autopilot steering system (1) of any of Example 1-21, wherein the first deflector unit (5) comprises a plurality of first deflectors.

Example 23: The marine autopilot steering system (1) of any of Example 1-22, wherein the second deflector unit (6) comprises a plurality of second deflectors.

Example 24: The marine autopilot steering system (1) of any of Example 1-23, wherein the positioning system (2) comprises a GPS receiver, or similar marine positioning systems.

Example 25: The marine autopilot steering system (1) of any of Example 1-24, wherein the control unit (7) is configured to obtain direction inputs.

Example 26: The marine autopilot steering system (1) of Example 25, wherein the control unit (7) is configured to adjust the deployment of the first and second deflector units (5, 6) based on the direction inputs.

Example 27: The marine autopilot steering system (1) of any of Example 1-26, wherein the input unit (3) comprises a user interface with a display screen.

Example 28: The marine autopilot steering system (1) of any of Example 1-27, wherein the control unit (7) is configured to operate in a manual override mode allowing direct user control of the first and second deflector units (5, 6).

Example 29: The marine autopilot steering system (1) of any of Example 1-28, wherein the control unit (7) is further configured to store navigation routes and replay them for automated steering.

Example 30: The marine autopilot steering system (1) of any of Example 1-29, wherein the control unit (7) is configured to integrate with other onboard systems such as radar, sonar, sensors, logs and/or nautical charts for enhanced navigational accuracy.

Example 31: The marine autopilot steering system (1) of any of Example 1-30, wherein the control unit (7) comprises a fail-safe mechanism to revert to manual control in the event of a system failure.

Example 32: A marine vessel (100) comprising the marine autopilot steering system (1) of any of Examples 1-31.

Example 33: The marine vessel (100) of Example 32, further comprising a hull or a plurality of hulls, having a bow and a stern (101), and a centerline (102), the first deflector unit (5) is arranged at a starboard side of the stern (101) and the second deflector unit (6) is arranged at a port side of the stern (101) on opposite side of the centerline (102).

Example 34: The marine vessel (100) of any of Examples 32-33, further comprising a propulsion unit (103).

Example 35: The marine vessel (100) of any of Examples 32-34, further comprising a rudder.

Example 36: A method for steering a marine vessel (100) having a stern (101) using a marine autopilot steering system (1) of any of the Examples 1-31, comprising:

provi 	providing a course over ground input using a positioning system (2);
setting a desired course or locking an existing course using an input unit (3);
providing a speed input using a speed sensor (4) or log;
steering the marine vessel (100) by deploying one of the first deflector unit (5) and the second deflector unit (6) based on the course over ground input and the speed input via a control unit (7) operatively connected with the positioning system (2), the speed sensor (4), the first deflector unit (5), and the second deflector unit (6).

Example 37: The method of Example 36, further comprising receiving direction inputs and adjusting the deployment of the first and second deflector units (5, 6) based on these inputs.

Example 38: The method of Example 36, whereby providing a course over ground input includes utilizing a GPS receiver to determine the marine vessel's current position.

Example 39: The method of Example 36, whereby the first deflector unit (5) is deployed for steering the marine vessel (100) towards starboard by providing a drag force at the starboard side of the stern (101).

Example 40: The method of Example 36, whereby the second deflector unit (6) is deployed for steering the marine vessel (100) towards port by providing a drag force at the port side of the stern (101).

Example 41: The method of Example 39 and/or 40, whereby the first deflector unit (5) and/or the second deflector unit (6) is/are withdrawn after correction of the course.

Example 42: The method of Example 36, further comprising operating the marine vessel (100) at a speed below a predetermined threshold where hydrodynamic flow is insufficient for effectively altering the marine vessel's transversal or longitudinal angle using its deflector units (5, 6).

Example 43: The method of Example 42, whereby a low hydrodynamic flow of the marine vessel (100) is determined by a Froude number (Fr) as defined as $Fr = V/\sqrt{(gL)}$ where (v) is the flow velocity (in m/s), (g) is the acceleration due to gravity (in $m/s^2$) and (L) is the marine vessel's water length (in m).

Example 44: The method of Example 43, whereby speeds with low hydrodynamic flow of the marine vessel (100) and/or threshold are at a Froude number below 0.4.

Example 45: The method of any of the Examples 42-44, further comprising receiving a speed input indicative of the marine vessel's current speed, determining whether the marine vessel's speed is below the threshold for effective deflector unit deployment, adjusting the deployment of the deflector units to maintain course alignment, continuously monitoring the speed input and hydrodynamic conditions to make real-time adjustments to the deflector units as necessary to ensure effective steering and course maintenance.

Example 46: The method of Example 45, whereby adjusting includes deployment and withdrawal of the deflector units (5, 6).

Example 47: The method of any of Example 42-47, comprising receiving environmental condition inputs, including wind speed, wind direction, and current flow, determining the threshold for effectively altering the marine vessel's angle based on the received environmental conditions, dynamically adjusting the threshold in response to changes in environmental conditions to optimize the deployment of the deflector units, deploying the deflector units based on the dynamically adjusted threshold to maintain the vessel's desired course and stability.

Example 48: The method of any of Examples 42-47, further comprising continuously monitoring both environmental conditions and the marine vessel's performance to make real-time adjustments to the threshold and deflector unit deployment as necessary to ensure effective steering.

Example 49: The method of any of Examples 36-48, further comprising automatically activating and deactivating the autopilot steering system (1) at predetermined speed input.

Example 50: The method of any of Examples 36-49, further comprising automatically regulating a course over ground by deploying one of the first deflector unit (5) and the second deflector unit (6) to maintain the desired course over ground input.

Example 51: The method of any of Examples 36-50, further comprising displaying navigational data and settings on a user interface with a display screen included in the input unit (3).

Example 52: The method of any of Examples 36-51, further comprising manually overriding the autopilot system (1) to allow direct user control of the first and second deflector units (5, 6).

Example 53: The method of any of Examples 36-52, whereby steering the marine vessel (100) comprises synchronizing the operation of the first and second deflector units (5, 6) to achieve lift or reduce drag as needed.

Example 54: The method of any of Examples 36-53, further comprising storing and replaying navigation routes within the control unit (7) for automated steering based on pre-set courses.

Example 55: The method of any of Examples 36-54, further comprising integrating data from other onboard systems such as radar, sonar, sensors, logs and/or nautical charts into the control unit (7) for enhanced navigational accuracy and safety.

Example 56: Use of a first deflector unit (5) arranged at a starboard side of the stern (101) of a marine vessel (100) and a second deflector unit (6) arranged at a port side of the stern (101) for steering the marine vessel (100).

Example 57: Use of Example 56, wherein the first deflector unit (5) and/or the second deflector unit (6) are deployed based on the course over ground input and the speed input.

Example 58: Use of any of Example 56-57, wherein the speed input is at speeds with low hydrodynamic flow of the marine vessel (100), whereby the marine vessel (100) is below a threshold for effectively altering the transversal or longitudinal angle of the specific marine vessel by use of its deflector units for the specific marine vessel.

Example 59: Use of Example 58, wherein a low hydrodynamic flow of the marine vessel (100) is determined by a Froude number (Fr) as defined as $Fr = V/\sqrt{(gL)}$ where (v) is the flow velocity (in m/s), (g) is the acceleration due to gravity (in $m/s^2$) and (L) is the marine vessel's water length (in m).

Example 60: Use of Example 59, wherein speeds with low hydrodynamic flow of the marine vessel (100) and/or threshold are a Froude number below 0.4.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A marine autopilot steering system (1) for a marine vessel (100) having a stern (101), comprising

    a positioning system (2) arranged to provide a course over ground input,
    an input unit (3) arranged for setting a course or lock an existing course,
    a speed sensor (4) arranged to provide a speed input,
    a first deflector unit (5) arranged at a starboard side of the stern (101) and a second deflector unit (6) arranged at a port side of the stern (101),
    a control unit (7) operatively connected with the positioning system (2), the speed sensor (4), the first deflector unit (5) and the second deflector unit (6), wherein the control unit (7) is configured to steer the marine vessel (100) by deploying one of the first deflector unit (5) and the second deflector unit (6) based on the course over ground input and the speed input.

2. The marine autopilot steering system (1) of claim 1, wherein the control unit (7) is configured to deploy the first deflector unit (5) for steering the marine vessel (100) towards starboard by providing a drag force at the starboard side of the stern.

3. The marine autopilot steering system (1) of claim 1, wherein the control unit (7) is configured to deploy the second deflector unit (6) for steering the marine vessel (100) towards port by providing a drag force at the port side of the stern.

4. The marine autopilot steering system (1) of any of the claims 1-3, wherein the control unit (7) is configured to withdraw the deployed deflector unit (5, 6) after the course has been corrected.

5. The marine autopilot steering system (1) of any of the claims 1-4, wherein the speed input is at speeds with low hydrodynamic flow of the marine vessel (100), whereby the marine vessel (100) is below a threshold for effectively altering the transversal or longitudinal angle of the specific marine vessel by use of its deflector units for the specific marine vessel.

6. The marine autopilot steering system (1) of any of the claims 1-5, wherein a low hydrodynamic flow of the marine vessel (100) is determined by a Froude number (Fr) as defined as

$$Fr = V/\sqrt{(gL)}$$

where (V) is the flow velocity (in m/s), (g) is the acceleration due to gravity (in m/s$^2$) and (L) is the marine vessel's water length (in m).

7. The marine autopilot steering system (1) of claim 6, wherein speeds with low hydrodynamic flow of the marine vessel (100) and/or threshold are a Froude number below 0.4.

8. The marine autopilot steering system (1) of any of the claims 1-7, wherein the control unit (7) is configured to automatically regulate a course over ground by deploying one of the first deflector unit (5) and the second deflector unit (6) to maintain the desired course over ground input, and subsequently withdraw the deflector unit (5, 6) after correction of the course.

9. A marine vessel (100) comprising the marine autopilot steering system (1) of any of claims 1-8.

10. The marine vessel (100) of claim 9, further comprising a hull or a plurality of hulls, having a bow and a stern (101), and a centerline (102), the first deflector unit (5) is arranged at a starboard side of the stern (101) and the second deflector unit (6) is arranged at a port side of the stern (101) on opposite side of the centerline (102).

11. A method for steering a marine vessel (100) having a stern (101) using a marine autopilot steering system (1) of any of the claims 1-8, comprising:

   - providing a course over ground input using a positioning system (2);
   - setting a desired course or locking an existing course using an input unit (3);
   - providing a speed input using a speed sensor (4) or log;
   - steering the marine vessel (100) by deploying one of the first deflector unit (5) and the second deflector unit (6) based on the course over ground input and the speed input via a control unit (7) operatively connected with the positioning system (2), the speed sensor (4), the first deflector unit (5), and the second deflector unit (6).

12. The method of claim 11, further comprising operating the marine vessel (100) at a speed below a predetermined threshold where hydrodynamic flow is insufficient for effectively altering the marine vessel's transversal or longitudinal angle using its deflector units (5, 6).

13. The method of claim 12, whereby a low hydrodynamic flow of the marine vessel (100) is determined by a Froude number (Fr) as defined as

$$Fr = V/\sqrt{(gL)}$$

where (V) is the flow velocity (in m/s), (g) is the acceleration due to gravity (in m/s$^2$) and (L) is the marine vessel's water length (in m).

14. The method of claim 13, whereby speeds with low hydrodynamic flow of the marine vessel (100) and/or threshold are a Froude number below 0.4.

15. The method of any of the claims 11-14, further comprising

   - receiving a speed input indicative of the marine vessel's current speed,
   - determining whether the marine vessel's speed is below the threshold for effective deflector unit deployment,
   - adjusting the deployment of the deflector units to maintain course alignment,
   - continuously monitoring the speed input and hydrodynamic conditions to make real-time adjustments to the deflector units as necessary to ensure effective steering and course maintenance.

FIG. 1

EP 4 772 432 A1

FIG. 2

FIG. 3

FIG. 4

FIG. 5

FIG. 6

Europäisches
Patentamt
European
Patent Office
Office européen
des brevets

# EUROPEAN SEARCH REPORT

**Application Number**

EP 25 15 0004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 857 794 B1 (JARRELL MATTHEW DAVID [US] ET AL) 2 January 2018 (2018-01-02) * column 2, line 58 - column 11, line 36; figures 1-6 * | 1-15 | INV. B63H25/04 B63H25/44 G05D1/00 |
| A | KR 2021 0097041 A (NABTESCO CORP [JP]) 6 August 2021 (2021-08-06) | 1,5-7, 12-15 | |
| A | Froude For Thought: "Froude for Thought", , 4 July 2024 (2024-07-04), pages 1-5, XP093289765, Retrieved from the Internet: URL:https://web.archive.org/web/2024070512 4350if_/https://dev-dlba.pantheonsite.io/w p-content/uploads/2021/04/Froude-for-Thoug ht.pdf * page 3 * | 1,5-7, 12-15 | |

**TECHNICAL FIELDS SEARCHED (IPC)**

B63H
G05D

The present search report has been drawn up for all claims

| Place of search | Date of completion of the search | Examiner |
|---|---|---|
| The Hague | 25 June 2025 | Blazquez Lainez, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 0004

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | Publication date |
|---|---|---|---|
| US 9857794 B1 | 02-01-2018 | NONE | |
| KR 20210097041 A | 06-08-2021 | CN 113184156 A | 30-07-2021 |
| | | CN 119239871 A | 03-01-2025 |
| | | CN 119239872 A | 03-01-2025 |
| | | JP 7622274 B2 | 27-01-2025 |
| | | JP 2021116011 A | 10-08-2021 |
| | | JP 2024074827 A | 31-05-2024 |
| | | JP 2024074828 A | 31-05-2024 |
| | | JP 2024074829 A | 31-05-2024 |
| | | KR 20210097041 A | 06-08-2021 |